# FASCICULE DE BREVET EUROPEEN

(11) **EP 2 466 339 B1**
(45) Date de publication et mention de la délivrance du brevet: **06.01.2021**
(21) Numéro de dépôt: 11191424.8
(22) Date de dépôt: 30.11.2011
(51) Int. Cl.: G02B 1/10, G02C 7/02, G02B 1/04, B29D 11/00, G02B 1/14

(54) **Lentille ophtalmique anti-choc et son procede de fabrication**
Stoßsichere Augenlinse und ihr Herstellungsverfahren
Impact resistant ophthalmic lens and method for manufacturing same

(30) Priorité: 14.12.2010 FR 1060463
(43) Date de publication de la demande: 20.06.2012
(73) Titulaire: Essilor International, 94220 Charenton-le-Pont (FR)
(72) Inventeur: Begon, Cédric, 94220 Charenton-le-Pont (FR); Lapprand, Aude, 94220 Charenton-le-Pont (FR); Leclaire, Yves, 94220 Charenton-le-Pont (FR); Liu, Yu, 94220 Charenton-le-Pont (FR); Marck, Christelle, 94220 Charenton-le-Pont (FR)
(74) Mandataire: Plasseraud IP

(56) Documents cités:
- WO-A1-97/35216
- FR-A1- 2 897 693
- FR-A1- 2 902 105

## Description

La présente invention concerne une lentille ophtalmique, comprenant un substrat transparent, une couche adhésive, un film thermoplastique et un revêtement anti-abrasion, et présentant une excellente résistance au choc. L'invention concerne également deux procédés de fabrication d'un tel article et un film multicouche permettant de mettre en œuvre ce procédé.

Les vernis anti-abrasifs sont connus pour réduire de manière indésirable la résistance aux chocs de lentilles ophtalmiques organiques. Une approche pour résoudre ce problème a consisté à interposer, entre le verre organique et le vernis anti-abrasion, une couche de primaire en élastomère (voir par exemple US 6 858 305 et US 7 357 503). Ce primaire, déposé sous forme de composition liquide puis éventuellement réticulé, absorbe non seulement les chocs reçus par le vernis anti-abrasif mais assure également la bonne adhérence du vernis abrasif sur le substrat. Son épaisseur est généralement comprise entre 1 et environ 20 µm.

Pour des verres très fins qui présentent, en certains endroits, des épaisseurs de l'ordre de 1 mm seulement, le pouvoir anti-choc de tels systèmes bicouche (primaire élastomère + vernis anti-abrasion) s'avère toutefois insuffisant. Il est en effet impossible d'accroitre l'épaisseur du primaire élastomère au-delà d'une certaine limite sous peine d'obtenir des verres diffusants, inacceptables dans le domaine ophtalmique.

Le document FR2902105, représentant un état de la technique pertinent, décrit un substrat de lentille ophtalmique sur lequel une couche adhésive et une couche comprenant un revêtement antiréfléchissant, un revêtement antirayure et un revêtement hydrophobe, sont déposées.

La Demanderesse, dans le cadre de ses recherches visant à mettre au point des verres toujours plus fins, a découvert qu'il était possible de remplacer avantageusement les systèmes bicouche connus, formés par un revêtement anti-abrasif sur un primaire en élastomère, par un film transparent composite, ci-après également appelé film anti-choc, constitué d'un film transparent thermoplastique et d'un revêtement anti-abrasif appliqué sur l'une des faces du film thermoplastique.

Ce film composite anti-choc, lorsqu'il est collé sur le substrat organique de l'article optique par l'intermédiaire d'une couche adhésive, confère à l'ensemble une résistance aux chocs remarquablement élevée. On montrera dans les exemples ci-après que cette augmentation de la résistance aux chocs est si considérable qu'elle permet de fabriquer des lentilles ophtalmiques fines résistant aux chocs, présentant des épaisseurs centrales d'environ 1 mm seulement.

La présente invention a par conséquent pour objet une lentille ophtalmique selon la revendication 1.

La présente invention a également pour objet deux procédés de fabrication d'une telle lentille ophtalmique, selon les revendications 8 et 9. Les deux procédés, décrits en détail ci-dessous différent l'un de l'autre essentiellement par le fait que, dans un des procédés, la couche adhésive est d'abord appliquée sur l'une des faces du film transparent couvert du revêtement anti-abrasion, alors que dans le deuxième procédé la couche adhésive est appliquée sur le substrat. Le substrat couvert de la couche adhésive reçoit ensuite le film transparent en polymère thermoplastique couvert du revêtement abrasif.

Le substrat organique de l'article optique de la présente invention peut être n'importe quel substrat organique couramment utilisé dans le domaine optique et en particulier ophtalmique.

On peut citer à titre d'exemples les substrats en polycarbonate, en polyamide, en polyimide, en polysulfone, en copolymères de poly(éthylène térephtalate) et de polycarbonate, en polyoléfines, notamment en polynorbornène, en homopolymères et copolymères de diéthylèneglycol bis(allylcarbonate), en polymères et copolymères (méth)acryliques notamment polymères et copolymères (méth)acryliques dérivés de bisphenol-A, en polymères et copolymères thio(méth)acryliques, en polyuréthane et polythiouréthane homopolymères ou copolymères, polymères et copolymères époxy et polymères et copolymères épisulfide.

Le substrat organique peut être soumis, avant application ou mise en contact avec la couche d'adhésif, à un traitement de surface physique, par exemple de type corona ou plasma, ou chimique, généralement destiné à améliorer l'adhérence.

Le film multicouche, ou film anti-choc, collé dans la présente invention *via* une couche adhésive sur le substrat en verre organique, est constitué
- d'une couche formée d'un polymère thermoplastique transparent, et
- d'une couche anti-abrasive déposée sur une des faces de la couche thermoplastique.

Le polymère thermoplastique doit être un polymère transparent, c'est-à-dire un polymère présentant une diffusion inférieure à 0,5 %, de préférence comprise entre 0,2 et 0,3 % et un facteur de transmission au moins égal à 90 %, de préférence compris entre 93% et 98 % (ces mesures de diffusion et de facteur de transmission sont réalisées selon la norme ASTM D1003 sur un appareil Haze Guard)

Sa température de transition vitreuse est supérieure à la température d'utilisation de l'article optique, qui est le plus souvent la température ambiante. Elle est généralement comprise entre 50 °C et 250 °C, de préférence entre 70 et 200 °C. A la température d'utilisation, le film polymère thermoplastique n'est donc pas à l'état plastique mais à l'état vitreux, rigide et cassant.

On utilisera de préférence en tant que film thermoplastique transparent pour la mise en œuvre de la présente invention un film en poly(éthylène téréphtalate) ayant une température de transition vitreuse (Tg), mesurée par DMA (analyse mécanique dynamique) comprise entre 50°C et 150°C ou un film de triacétate de cellulose ayant une Tg entre 100 et 180 °C.

L'épaisseur de ce film en polymère thermoplastique est de préférence comprise entre 50 µm et 150 µm, en particulier entre 60 µm et 100 µm.

Ce film polymère est revêtu sur une de ses faces d'un revêtement anti-abrasif connu en tant que tel. Il s'agit de préférence d'un revêtement anti-abrasif de type vernis nanocomposite à base de silice dispersée dans une matrice organique. De tels vernis sont décrits en détail, par exemple dans le brevet US 5 619 288, EP 0 614 957 et dans la demande internationale WO 02/00561. Parmi les revêtements anti-abrasifs mis en œuvre dans le cadre de l'invention, on notera les revêtements obtenus à partir d'époxyalkylalkoxysilanes, tels que le γ-glycidoxypropyltrimethoxysilane (GLYMO), et d'alkylalcoxysilanes, tels que le diméthyldiéthoxysilane (DMDES), ou d'hydrolysats de ces composés, et d'un catalyseur tel que l'aluminium acétylacétonate. Préférentiellement, le revêtement anti-abrasif contient aussi un liant colloïdal, tel qu'un oxyde métallique ou de la silice.

Ce revêtement anti-abrasif peut être appliqué selon des procédés connus, par exemple par centrifugation (*spin coating*), par immersion (*dip coating*), par étalement (*bar coating*), ou par pulvérisation (*spray coating*).

L'épaisseur de ce revêtement anti-abrasion est similaire à celle des revêtements anti-abrasion connus et est généralement comprise entre 1 et 15 µm, de préférence entre 2 et 10 µm.

Dans un des deux procédés de fabrication de l'article optique de la présente invention, le film en polymère thermoplastique reçoit, sur sa face opposée à celle portant le revêtement anti-abrasif, une mince couche d'adhésif.

Différentes familles d'adhésifs peuvent être mises en œuvre dans le cadre de l'invention. Ces adhésifs présentent de préférence un module élastique, ou module de Young, inférieur à celui du substrat et inférieur à celui du film thermoplastique. D'une façon générale l'adhésif présente un module élastique à température ambiante compris entre 10³ et 10⁷ Pa (Pascal). Parmi les adhésifs particulièrement adaptés à l'invention on peut citer notamment les PSA (*Pressure Sensitive Adhesive*) et les adhésifs thermofusibles (HMA, *Hot Melt Adhesives*).

Par PSA on comprend un adhésif de contact sec, généralement de nature viscoélastique, qui ne nécessite qu'une faible pression pour adhérer sur la surface de contact. Les PSA sont caractérisés par le fait qu'ils ne nécessitent pas d'activation par l'eau, un solvant ou par chauffage pour exercer leur caractère adhésif de façon permanente sur une surface de contact.

Avantageusement l'adhésif sensible à la pression (PSA) utilisé est choisi dans le groupe formé par un composé à base de polyacrylate, un copolymère à blocs à base de styrène et un mélange contenant un caoutchouc naturel. Plus particulièrement, on peut citer à titre d'exemples et de façon non limitative, les PSA de compositions générales à base de polyacrylates, de polyméthacrylates, de copolymères éthyléniques tels que les copolymères éthylène-acétate de vinyle, éthylène-acrylate d'éthyle et éthylène-méthacrylate d'éthyle, les PSA à base de caoutchouc synthétique et élastomères incluant les silicones, les polyuréthanes, les styrène-butadiènes, les polybutadiènes, les polyisoprènes, les polypropylènes, les polyisobutylènes, les PSA à base de polymères comprenant des nitriles ou acrylonitriles, les PSA à base de polychloroprène, les PSA à base de copolymères séquencés comprenant des blocs polystyrène, polyéthylène, polypropylène, polyisoprène ou polybutadiène, ainsi que les mélanges de ces polymères.

Ces PSA peuvent également contenir un ou plusieurs additifs choisis notamment parmi les agents de pégosité (*tackifier*), les plastifiants, les liants, les antioxydants, les stabilisants, les pigments, les colorants, les agents dispersants, et les agents diffusants. D'une façon préférentielle dans le cadre de l'invention on utilisera un PSA à base de polyacrylate.

Pour l'application envisagée dans la présente invention, il est important de choisir le PSA de manière à ne pas réduire indésirablement la transparence de l'article optique obtenu. La couche de PSA peut bien entendu présenter un aspect trouble *avant* application sur le substrat organique mais ce trouble doit disparaître après collage.

La force de pelage (test de pelage à 90 °) peut varier entre 10 et 25 N/25mm.

Les PSA disponibles sur le marché et intéressants pour l'utilisation en tant qu'adhésif dans la présente invention sont des PSA de qualité optique, également très utilisés dans le domaine des écrans d'affichage. On peut citer à titre d'exemple des produits commercialisés par la société Nitto Denko, tels que le PSA CS 9621, ou encore l'adhésif 3M 8141, commercialisé par la société 3M.

La couche de PSA peut être appliquée sur le film en polymère thermoplastique avant ou après application du revêtement abrasif, mais est de préférence appliquée après celui-ci. La couche PSA peut éventuellement être protégée par une couche à faible adhérence (*release layer*) qui sera décollée directement avant la mise en œuvre du procédé.

Il est également possible d'utiliser dans le cadre de l'invention un adhésif thermofusible (HMA, de l'anglais *hot melt adhesive*). Le terme adhésif thermofusible englobe les HMA classiques qui peuvent fondre et durcir un grand nombre de fois, mais également les HMA réactifs qui sont appliqués comme des HMA classiques mais réticulent et forment ainsi des liaisons adhésives permanentes qu'il est impossible de faire fondre une nouvelle fois.

Des adhésifs thermofusibles de qualité optique sont de préférence des adhésifs à base de polyuréthannes qui se présentent sous forme de dispersions aqueuses de polyuréthannes de haut poids moléculaire. La société Bayer commercialise deux adhésifs thermofusibles appropriés sous les dénominations Dispercoll® U 42 et KA-8758. La société Bond Polymcrs International LLC propose également deux adhésifs thcrmofusibles sous forme de dispersions aqueuses de polyuréthannes sous les références Bondthane® UD-104 et Bondthane® UD-108.

Ces dispersions aqueuses peuvent être mélangées, avant application, avec des additifs destinés à modifier leurs propriétés rhéologiques, mécaniques ou optiques. Ainsi, l'ajout d'une silice colloïdale se traduira par une dureté et durabilité accrues.

Les polymères thermofusibles peuvent être choisis parmi les polyoléfines, les polyamides, les polyuréthannes, les poly(uréthane urée), les poly(vinylpyrrolidone), les polyesters, les poly(ester amide), les poly(oxazolines), les systèmes à base de polymères acryliques. Des polyoléfines appropriées en tant qu'adhésifs thermofusibles appropriés sont décrits par exemple dans le brevet US 5128388. On préfère en particulier des polyoléfines choisies parmi les copolymères à blocs élastomères tels que ceux comprenant des blocs de polystyrène, de polybutadiène, de polyisoprène ou des blocs qui sont des copolymères d'éthylène et de butylène.

L'épaisseur de la couche d'adhésif est généralement comprise entre 10 et 50 µm, de préférence entre 15 et 30 µm.

Le substrat transparent en verre organique et le film multicouche anti-choc sont ensuite collés ensemble aux étapes C et D (premier procédé) ou aux étapes c et d (deuxième procédé). Ces étapes de collage sont de préférence précédées d'une étape de thermoformage du film multicouche, à une température inférieure à la température de transition vitreuse du polymère thermoplastique. Cette étape de thermoformage a essentiellement pour but de donner au film multicouche une forme similaire à celle de la surface sur laquelle il sera collé, afin d'éviter des contraintes, des plies ou l'endommagement du film multicouche lors de l'étape de collage. La température de thermoformage est de préférence inférieure d'au moins 10 °C à la température de transition vitreuse.

Le thermoformage et le collage du film multicouche anti-choc sur le substrat en verre organique peuvent être mis en œuvre selon des techniques connues dans l'art. On peut citer à titre d'exemples de tels procédés ceux décrits en détail dans les demandes EP 2018262 et WO 2006/105999 toutes deux au nom de la Demanderesse.

Lorsque l'article optique est une lentille ophtalmique et en particulier une lentille ophtalmique fine, le film multicouche est avantageusement déposé sur les deux faces du substrat organique, c'est-à-dire sur la face arrière et la face avant de la lentille.

Les exemples ci-après montrent que, en termes de résistance aux chocs des lentilles finies obtenues, le bénéfice du collage du film anti-choc selon l'invention est particulièrement spectaculaire lorsque le film est collé sur la face convexe (généralement la face avant) d'une lentille ophtalmique. Le collage du film anti-choc uniquement sur la surface avant de la lentille, qui est de préférence une face convexe, constitue par conséquent un mode de réalisation particulièrement préféré du procédé.

Comme expliqué en introduction, les avantages conférés par le collage d'un film anti-choc selon l'invention sont particulièrement intéressants pour des lentilles ophtalmiques très fines, de préférence des lentilles ophtalmiques à dioptrie négative, présentant de très faibles épaisseurs au centre.

L'invention concerne par conséquent une lentille ophtalmique ayant une épaisseur minimale au centre inférieure à 2 mm, de préférence inférieure à 1,5 mm, de manière encore plus préférée inférieure à 1,2 mm, cette épaisseur englobant à la fois le substrat organique et le ou les films multicouches collés sur celui-ci.

Bien entendu, les caractéristiques techniques et modes de réalisation préférés de ces films multicouches sont ceux décrits ci-dessus à propos de la description du procédé de fabrication d'un article optique.

### Exemple

### Substrat organique

On utilise des verres organiques en polythiourethanne ayant un indice de réfraction de 1,67 (Stylis® commercialisé par la société Essilor), une dioptrie de -1,50 et une épaisseur au centre de 0,9 mm ou de 1,1 mm. Ces verres sont soumis, avant application des films multicouches, à un traitement de surface par plasma d'oxygène sous pression réduite.

### Films multicouches antichocs

On utilise en tant que film thermoplastique transparent
- un film en triacétate de cellulose (FT TD 80SL commercialisé par la société Fuji) d'une épaisseur de 80 µm et d'une température de transition vitreuse, déterminée par analyse mécanique dynamique (DMA de l'anglais *Dynamic Mecanical Analysis*), de 170 °C, ou
- un film en poly(éthylène téréphtalate) (U34® commercialisé par Toray Co.) d'une épaisseur de 75 µm (température de transition vitreuse déterminée par DMA = 119 °C).

On dépose sur ces films par centrifugation un revêtement anti-abrasion d'une épaisseur de 4 µm qui est ensuite soumis à une réticulation par chauffage pendant 3 heures à 100 °C. Ce revêtement anti-abrasion est obtenu selon l'exemple 3 du brevet EP0614957B 1. Ce revêtement comprend, par rapport au poids total de la composition, 22% de glycidoxypropylmethyldimethoxysilane, 62% de silice colloïdale contenue à 30% dans du méthanol, et 0.70% d'aluminium acétylacétonate

On applique ensuite sur la face opposée des films ainsi obtenus, une couche de PSA acrylique (Nitto CS9621) en une épaisseur d'environ 25 µm.

Le film tricouche est ensuite thermoformé à une température d'environ 100 °C afin de lui donner la forme de la surface sur laquelle il sera collée.

### Collage

Le collage des films multicouches sur les lentilles en verre organique se fait au moyen du procédé décrit dans WO 2006/105999 par application d'une pression uniforme d'environ 0,03 MPa par le biais d'un tampon déformable.

Les lentilles ainsi obtenues sont ensuite soumises à un usinage à l'aide d'une détoureuse National Optronics 6E et fraisées à la forme d'un disque de 50 mm de diamètre.

### Evaluation de la résistance aux chocs

On évalue la résistance aux chocs des lentilles selon la norme ANSI Standard Z 80.1 - 1987, par chute d'un impacteur au centre de la face convexe de chaque verre. L'évolution de l'accélération de l'impacteur lors du contact avec le verre permet de déterminer l'énergie de rupture du verre. Pour chaque série de verres (n = 20 - 40), on détermine l'énergie moyenne de rupture (ER_{moy} en mJ) et l'énergie minimale de rupture (ERmini).

A titre de comparaison, on évalue également la résistance aux chocs de lentilles ophtalmiques ayant reçu un revêtement antichoc classique appliqué par immersion (*dipcoating*), sur les deux faces de la lentille. Le revêtement anti-choc classique se compose d'un primaire à base de latex (2µm) couvert d'un revêtement anti-abrasion identique à celui des exemples selon l'invention d'une épaisseur de 4 µm. Le latex utilisé est obtenu selon le protocole décrit dans l'exemple 1 du brevet US 5316791 en utilisant, comme substrat, le W-240 qui est une dispersion aqueuse de polyurethane commercialisée par la société Baxenden. Ce primaire est déposé par trempage, puis réticulé à 85°C pendant 4 minutes.

Le tableau ci-après indique,
- l'épaisseur au centre du substrat nu (Epₙᵤ) exprimée en mm,
- le film antichoc (ou revêtement antichoc pour les essais comparatif)
- l'épaisseur au centre avec le ou les films (ou revêtements) antichoc (Ep_{finale}) exprimée en mm,
- le nombre de verres testés pour chaque série (n),
- l'énergie moyenne de rupture (E_{moy}R) exprimée en mJ,
- l'énergie minimale de rupture (EₘᵢₙᵢR) exprimée en mJ, et
- le nombre de verres non cassés.

**Tableau**

| | **Epₙᵤ** | **Antichoc** | **Ep_{finale}** | **n** | **ER_{moy}** | **ERₘᵢₙᵢ** | **non cassés** |
|---|---|---|---|---|---|---|---|
| Ex. Comp. 1 | 0,9 | Primaire latex + antiabrasif (cx-cc) | 0,9 | 38 | 841 | 477 | 0 |
| Ex. Comp. 2 | 1,1 | Primaire latex + antiabrasif (cx-cc) | 1,1 | 38 | 644 | 426 | 0 |
| Ex. 1 | 0,9 | Film TAC + antiabrasif (cx-cc) | 1,1 | 37 | 2136 | 1723 | 0 |
| Ex. 2 | 1,1 | Film TAC + antiabrasif (cx-cc) | 1,3 | 37 | 2023 | 1596 | 0 |
| Ex. 3 | 1,1 | Film TAC + antiabrasif (ex) | 1,2 | 30 | 5300 | 1921 | 12 |
| Ex. 4 | 1,1 | Film TAC + antiabrasif (ce) | 1,2 | 30 | 2005 | 1272 | 0 |
| Ex. 5 | 0,9 | Film PET + antiabrasif (cx-cc) | 1,1 | 33 | >6263 | 4477 | 30 |
| Ex. 6 | 1,1 | Film PET + antiabrasif (cx-cc) | 1,3 | 20 | >6296 | 5956 | 16 |

| | | | | | | | |
|---|---|---|---|---|---|---|---|
| (cx-cc) = déposé sur la face convexe et concave de la lentille (ex) = déposé sur la face convexe uniquement (cc) = déposé sur la face concave uniquement | | | | | | | |

On constate que l'énergie moyenne nécessaire à la rupture des lentilles selon l'état de la technique (Exemples comparatifs 1 et 2) est d'environ 750 mJ, la différence entre les deux échantillons d'épaisseur différente étant considérée comme non significative.

Lorsque les lentilles portent, sur chacune de leurs faces, un film multicouche antichoc selon l'invention à base d'un film en triacétate de cellulose (Exemples 1 et 2), l'énergie moyenne de rupture augmente considérablement. Elle est presque trois fois plus élevée, alors que les lentilles finales sont à peine plus épaisses que celles des Exemples comparatifs 1 et 2.

Les Exemples 3 et 4 permettent de comprendre que la contribution à la résistance aux chocs des revêtements appliqués sur la face convexe et concave de la lentille n'est pas la même. En effet, toutes conditions égales par ailleurs, la présence d'un film multicouche antichoc sur la face convexe de la lentille permet d'obtenir une énergie moyenne de rupture plus de deux fois plus importante qu'un film identique appliqué sur la face concave. Douze verres sur trente résistent à la rupture par l'impacteur.

Enfin, les Exemples 5 et 6 montrent que des films multicouches à base de PET permettent d'obtenir des lentilles présentant une très haute résistance aux chocs, seul 7 verres sur 53 se rompant sous l'impact.

## Revendications

1. Lentille ophtalmique comprenant
- un substrat transparent de lentille ophtalmique, en verre organique,
- une couche adhésive recouvrant au moins une des faces du substrat transparent,
- un film transparent en polymère thermoplastique fixé sur le substrat transparent par l'intermédiaire de la couche adhésive, et
- un revêtement anti-abrasion directement déposé sur une des faces du film transparent en polymère thermoplastique pour recouvrir ledit film transparent en polymère thermoplastique,
- la lentille ophtalmique ayant une épaisseur minimale au centre inférieure à 2 mm, de préférence inférieure à 1,5 mm, de manière encore plus préférée inférieure à 1,2 mm ;
- le polymère thermoplastique formant le film transparent étant choisi parmi le triacétate de cellulose (TAC) et le poly(éthylène téréphtalate) (PET) ; et
- la couche adhésive étant une couche d'adhésif sensible à la pression ou une couche d'adhésif thermofusible.

2. Lentille ophtalmique selon la revendication 1, **caractérisée par le fait que** le polymère thermoplastique formant le film transparent a une température de transition vitreuse, mesurée par analyse mécanique dynamique, comprise entre 50 °C et 250 °C, de préférence entre 70 et 200 °C.

3. Lentille ophtalmique selon l'une quelconque des revendications précédentes, **caractérisée par le fait que** le film transparent en polymère thermoplastique a une épaisseur comprise entre 50 µm et 150 µm, de préférence entre 60 µm et 100 µm.

4. Lentille ophtalmique selon l'une quelconque des revendications précédentes, **caractérisée par le fait que** le revêtement anti-abrasion à une épaisseur comprise entre 1 et 15 µm, de préférence comprise entre 2 et 10 µm.

5. Lentille ophtalmique selon l'une quelconque des revendications précédentes, **caractérisée par le fait que** l'épaisseur de la couche adhésive est comprise entre 10 et 40 µm, de préférence entre 15 et 30 µm.

6. Lentille ophtalmique selon l'une quelconque des revendications précédentes, **caractérisée par le fait qu'**il s'agit d'une lentille ophtalmique dans laquelle les deux faces du substrat transparent sont couvertes d'une couche adhésive, d'un film transparent en polymère thermoplastique et d'un revêtement anti-abrasion recouvrant le film transparent en polymère thermoplastique.

7. Lentille ophtalmique selon l'une quelconque des revendications 1 à 5, **caractérisée par le fait qu'**il s'agit d'une lentille ophtalmique dans laquelle une seule face du substrat transparent est couverte d'une couche adhésive, d'un film transparent en polymère thermoplastique et d'un revêtement anti-abrasion recouvrant le film transparent en polymère thermoplastique, cette face étant de préférence une surface convexe.

8. Procédé de fabrication d'une lentille ophtalmique selon les revendications 1 à 7, comprenant :
A. la mise à disposition d'un substrat transparent de lentille ophtalmique, en verre organique,
B. la mise à disposition d'un film multicouche adhésif constitué d'un film transparent en polymère thermoplastique, d'un revêtement anti-abrasion directement déposé sur une des deux faces du film transparent en polymère thermoplastique pour recouvrir ledit film transparent en polymère thermoplastique et d'une couche d'adhésif couvrant l'autre face du film transparent en polymère thermoplastique,
C. la mise en contact de la couche d'adhésif du film multicouche adhésif avec le substrat transparent en verre organique, et
D. l'application d'une pression uniforme sur toute la zone de contact de manière à faire adhérer le film multicouche sur le substrat transparent en verre organique.

9. Procédé de fabrication d'une lentille ophtalmique selon l'une des revendications 1 à 7, comprenant :
a. la mise à disposition d'un substrat transparent de lentille ophtalmique, en verre organique, recouvert sur au moins une de ses faces d'une couche d'adhésif,
b. la mise à disposition d'au moins un film multicouche constitué d'un film transparent en polymère thermoplastique et d'un revêtement anti-abrasion directement déposé sur une des faces du film transparent en polymère thermoplastique pour recouvrir ledit film transparent en polymère thermoplastique,
c. la mise en contact de l'autre face du film transparent en polymère thermoplastique du film multicouche avec la couche d'adhésif sur le substrat transparent en verre organique, et
d. l'application d'une pression uniforme sur toute la zone de contact de manière à faire adhérer le film multicouche sur le substrat transparent en verre organique.

## Patentansprüche

1. Ophthalmische Linse, umfassend
- ein transparentes Substrat für eine ophthalmische Linse aus organischem Glas,
- eine Klebeschicht, die mindestens eine der Seiten des transparenten Substrats abdeckt,
- einen transparenten Film aus thermoplastischem Polymer, der mittels der Klebeschicht auf dem transparenten Substrat fixiert ist, und
- einen abriebfesten Überzug, der direkt auf eine der Seiten des transparenten Films aus thermoplastischem Polymer aufgebracht ist, um den transparenten Film aus thermoplastischem Polymer abzudecken,
- wobei die ophthalmische Linse eine Mindestdicke im Mittelpunkt von weniger als 2 mm, bevorzugt weniger als 1,5 mm, noch bevorzugter weniger als 1,2 mm hat;
- wobei das den transparenten Film bildende thermoplastische Polymer unter Cellulosetriacetat (CTA) und Polyethylenterephthalat (PET) gewählt ist;
- wobei die Klebeschicht eine druckempfindliche Klebstoffschicht oder eine Schmelzklebstoffschicht ist.

2. Ophthalmische Linse nach Anspruch 1, **dadurch gekennzeichnet, dass** das den transparenten Film bildende thermoplastische Polymer eine Glasübergangstemperatur, gemessen durch dynamische mechanische Analyse, zwischen 50 °C und 250 °C, bevorzugt zwischen 70 und 200 °C hat.

3. Ophthalmische Linse nach einem der vorhergehenden Ansprüche, **dadurch gekennzeichnet, dass** der transparente Film aus thermoplastischem Polymer eine Dicke zwischen 50 µm und 150 µm, bevorzugt zwischen 60 µm und 100 µm hat.

4. Ophthalmische Linse nach einem der vorhergehenden Ansprüche, **dadurch gekennzeichnet, dass** der abriebfeste Überzug eine Dicke zwischen 1 und 15 µm, bevorzugt zwischen 2 und 10 µm hat.

5. Ophthalmische Linse nach einem der vorhergehenden Ansprüche, **dadurch gekennzeichnet, dass** die Dicke der Klebeschicht zwischen 10 und 40 µm, bevorzugt zwischen 15 und 30 µm beträgt.

6. Ophthalmische Linse nach einem der vorhergehenden Ansprüche, **dadurch gekennzeichnet, dass** es sich um eine ophthalmische Linse handelt, bei der die beiden Seiten des transparenten Substrats mit einer Klebeschicht, einem transparenten Film aus thermoplastischem Polymer und einem den transparenten Film aus thermoplastischem Polymer abdeckenden abriebfesten Überzug bedeckt sind.

7. Ophthalmische Linse nach einem der Ansprüche 1 bis 5, **dadurch gekennzeichnet, dass** es sich um eine ophthalmische Linse handelt, bei der eine einzige Seite des transparenten Substrats mit einer Klebeschicht, einem transparenten Film aus thermoplastischem Polymer und einem den transparenten Film aus thermoplastischem Polymer abdeckenden abriebfesten Überzug bedeckt ist.

8. Verfahren zur Herstellung einer ophthalmischen Linse nach den Ansprüchen 1 bis 7, umfassend:
A. das Bereitstellen eines transparenten Substrats für eine ophthalmische Linse aus organischem Glas,
B. das Bereitstellen eines mehrschichtigen Klebefilms, der aus einem transparenten Film aus thermoplastischem Polymer, einem abriebfesten Überzug, der direkt auf eine der beiden Seiten des transparenten Films aus thermoplastischem Polymer aufgebracht ist, um den transparenten Film aus thermoplastischem Polymer abzudecken, und einer Klebstoffschicht, welche die andere Seite des transparenten Films aus thermoplastischem Polymer bedeckt, besteht,
C. das Inkontaktbringen der Klebstoffschicht des mehrschichtigen Klebefilms mit dem transparenten Substrat aus organischem Glas und
D. das Aufbringen eines gleichmäßigen Drucks auf den Kontaktbereich, um den mehrschichtigen Film auf dem transparenten Substrat aus organischem Glas haften zu lassen.

9. Verfahren zur Herstellung einer ophthalmischen Linse nach einem der Ansprüche 1 bis 7, umfassend:
a. das Bereitstellen eines transparenten Substrats für eine ophthalmische Linse aus organischem Glas, das auf mindestens einer seiner Seiten mit einer Klebstoffschicht abgedeckt ist,
b. das Bereitstellen mindestens eines mehrschichtigen Films, der aus einem transparenten Film aus thermoplastischem Polymer und einem abriebfesten Überzug besteht, der direkt auf eine der Seiten des transparenten Films aus thermoplastischem Polymer aufgebracht ist, um den transparenten Film aus thermoplastischem Polymer abzudecken,
c. das Inkontaktbringen der anderen Seite des transparenten Films aus thermoplastischem Polymer des mehrschichtigen Films mit der Klebstoffschicht auf dem transparenten Substrat aus organischem Glas und
d. das Aufbringen eines gleichmäßigen Drucks auf den Kontaktbereich, um den mehrschichtigen Film auf dem transparenten Substrat aus organischem Glas haften zu lassen.

## Claims

1. Ophthalmic lens comprising:
- a transparent ophthalmic lens substrate, made of organic glass,
- an adhesive layer covering at least one of the faces of the transparent substrate,
- a transparent film made of thermoplastic polymer fixed to the transparent substrate via the adhesive layer, and
- an abrasion-resistant coating directly deposited on one of the faces of the transparent film made of thermoplastic polymer in order to cover said transparent film made of thermoplastic polymer,
- the ophthalmic lens having a minimum thickness at the centre of less than 2 mm, preferably of less than 1.5 mm, more preferably still of less than 1.2 mm;
- the thermoplastic polymer forming the transparent film being chosen from cellulose triacetate (CTA) and poly(ethylene terephthalate) (PET);
- the adhesive layer being a pressure-sensitive adhesive layer or a hot-melt adhesive layer.

2. Ophthalmic lens according to Claim 1, **characterized in that** the thermoplastic polymer forming the transparent film has a glass transition temperature, measured by dynamic mechanical analysis, of between 50°C and 250°C, preferably between 70°C and 200°C.

3. Ophthalmic lens according to either one of the preceding claims, **characterized in that** the transparent film made of thermoplastic polymer has a thickness of between 50 µm and 150 µm, preferably between 60 µm and 100 µm.

4. Ophthalmic lens according to any one of the preceding claims, **characterized in that** the abrasion-resistant coating has a thickness of between 1 µm and 15 µm, preferably of between 2 µm and 10 µm.

5. Ophthalmic lens according to any one of the preceding claims, **characterized in that** the thickness of the adhesive layer is between 10 µm and 40 µm, preferably between 15 µm and 30 µm.

6. Ophthalmic lens according to any one of the preceding claims, **characterized in that** it is an ophthalmic lens in which the two faces of the transparent substrate are covered with an adhesive layer, with a transparent film made of thermoplastic polymer and with an abrasion-resistant coating covering the transparent film made of thermoplastic polymer.

7. Ophthalmic lens according to any one of Claims 1 to 5, **characterized in that** it is an ophthalmic lens in which only one face of the transparent substrate is covered with an adhesive layer, with a transparent film made of thermoplastic polymer and with an abrasion-resistant coating covering the transparent film made of thermoplastic polymer, this face preferably being a convex surface.

8. Process for the manufacture of an ophthalmic lens according to Claims 1 to 7, comprising:
A. the provision of a transparent ophthalmic lens substrate, made of organic glass,
B. the provision of an adhesive multilayer film consisting of a transparent film made of thermoplastic polymer, of an abrasion-resistant coating directly deposited on one of the two faces of the transparent film made of thermoplastic polymer, in order to cover said transparent film made of thermoplastic polymer, and of an adhesive layer covering the other face of the transparent film made of thermoplastic polymer,
C. bringing the adhesive layer of the adhesive multilayer film into contact with the transparent substrate made of organic glass, and
D. the application of a uniform pressure over the entire contact zone so as to cause the multilayer film to adhere to the transparent substrate made of organic glass.

9. Process for the manufacture of an ophthalmic lens according to one of Claims 1 to 7, comprising:
a. the provision of a transparent ophthalmic lens substrate, made of organic glass, covered on at least one of its faces with an adhesive layer,
b. the provision of at least one multilayer film consisting of a transparent film made of thermoplastic polymer and of an abrasion-resistant coating directly deposited on one of the faces of the transparent film made of thermoplastic polymer, in order to cover said transparent film made of thermoplastic polymer,
c. bringing the other face of the transparent film made of thermoplastic polymer of the multilayer film into contact with the adhesive layer on the transparent substrate made of organic glass, and
d. the application of a uniform pressure over the entire contact zone so as to cause the multilayer film to adhere to the transparent substrate made of organic glass.
